# EUROPEAN PATENT APPLICATION

(11) **EP 2 916 204 A1**
(43) Date of publication of application: **09.09.2015**
(21) Application number: 12887515.0
(22) Date of filing: 31.10.2012
(51) Int. Cl.: G06F 3/048, G06T 19/00

(54) **IMAGE DISPLAY SYSTEM, ELECTRONIC DEVICE, PROGRAM, AND IMAGE DISPLAY METHOD**

(71) Applicant: Warld Limited, Wan Chai, Hong Kong (CN)
(72) Inventor: KAWAMATSU, Tatsuya, Kiyosu-shi Aichi 452-0022 (JP); SHIKA, Takeshi, Inzai-shi Chiba 270-1342 (JP); SAITO, Yuichi, Nagoya-shi, Aichi 457-0833 (JP)
(74) Representative: Seemann & Partner
(86) International application number: PCT/JP2012/078192
(87) International publication number: WO 2014/068706

(57) **Abstract**

Provided is an image display system comprising a camera unit and a display unit that displays an image captured by the camera unit. The system comprises: a marker-detection unit that detects a marker specified in advance in the image captured by the camera unit; a content-reproduction unit that reproduces the content corresponding to a marker in a display area of the display unit; an event-detection unit that detects whether an event for changing a display-mode of the content has occurred; and an area-change unit that changes a display section where the content is reproduced to a display section that is in accordance with the detected event. The content-reproduction unit reproduces, in the changed display section, the content that had been reproduced.

## Description

### RELATED APPLICATION

This application is a translation of the international application PCT/JP2012/078192 filed on October 31, 2012. The entire content of this application is incorporated herein by reference.

### TECHNICAL FIELD

The present invention relates to an image display system that displays images captured by a camera unit on a display unit.

### BACKGROUND ART

In recent years, development in Augmented Reality (AR) technology, such as displaying virtual information superimposed on images captured by a camera unit, has been promoted. In particular, in a terminal device comprising a camera unit and a display unit, such technology displays an image, captured by the camera unit, on the display unit, and at the same time, superimpose text information and so forth on an image field that is specified as a marker to be detected from the image (see Patent Documents 1 and 2, and others).

### PRIOR ART DOCUMENTS

### PATENT DOCUMENTS

Patent Document 1: Japanese Unexamined Patent Application Publication No. 2010-238096.
Patent Document 2: Japanese Patent No. 3700021.

### SUMMARY OF THE INVENTION

### PROBLEMS TO BE SOLVED BY THE INVENTION

A usage of such kind of technology may be to reproduce, in an image captured by the camera, a different content corresponding to the marker (for example, a still image and a moving image) in a specified image section that is based on the marker.

In particular, by image-capturing an area including a prepared marker by the camera unit, content obtained as corresponding to the marker is reproduced in an image section that is based on the marker in a display area of a display unit. According to this usage, it is possible to virtually create a circumstance, in which the content is reproduced in a section where the marker is positioned in the real-space.

However, since the content is reproduced dependent on the marker in the real-space, there is a possible risk that the degree of freedom in reproducing and viewing the content is impaired in such usage.

For example, if the content requires more than a certain amount of time to view, a user has to keep image-capturing a section that includes the marker by the camera unit in the real-space to view the content continuously; the user is not always allowed a high degree of freedom in terms of the user's posture when viewing and so forth. This could also be a constraint for providers of services using AR technology in providing their services.

In AR technology, it is desirable to have the degree of freedom in reproducing and viewing the content unimpaired.

### MEANS FOR SOLVING THE PROBLEMS

A first aspect of the present invention is an image display system comprising a camera unit, and a display unit that displays an image captured by the camera unit; the system comprises a marker-detection unit, a content-reproduction unit, an event-detection unit, and an area-change unit.

Among these, after image-capturing by the camera unit starts or after displaying of the captured image in the display unit starts, the marker-detection unit detects that a marker specified in advance as an object-to-be-detected is present in the captured image; in a state where the marker is being detected by the marker-detection unit, the content-reproduction unit reproduces content corresponding to the marker in a display section defined based on the marker in the display unit; after reproducing of the content by the content-reproduction unit starts, the event-detection unit detects whether an event for changing a display-mode of the content has occurred in the image display system; and, if the occurrence of the event is detected by the event-detection unit, the area-change unit changes at least the display section for reproducing the content to a display section that is in accordance with the detected event.

In addition, after the display section is changed by the area-change unit, the content-reproduction unit reproduces, in the changed display section, the content that has been reproduced.

In the present invention, it is possible to change the display section for reproducing the content from a display section defined based on a marker in an image to a display section that is in accordance with the event occurred in the image display system.

As described above, by changing to the display section that is in accordance with the event, content-for-reproduction corresponding to the marker can be reproduced independently of a display section where a previous marker is positioned. Thereby, the content can be reproduced continuously regardless of whether the area including the marker is image-captured by the camera unit; thus, a high degree of freedom in reproducing and viewing the content is provided.

In this first aspect, a marker that is an object-to-be-detected may be specified in advance as an image field comprising particular image features (such as shapes and color distributions). In this case, the image field comprising these image features may be discerned from the image captured by the camera unit and detected as a marker.

Also, in a case where it is possible to identify an actual position in the real-space of an image field included in the image captured by the camera unit based on information such as a position or direction of the image display system, an image field comprising a particular position in the real-space (for example, a place or construction) may be discerned and detected as a marker.

In the above-mentioned aspect, the content corresponding to the marker is accordingly accessed and reproduced when image-capturing by the camera unit starts or when the marker is detected. The content may be accessed in any place as long as it is where the content is stored; it may be a storage place on the network or a storage place in the storage unit in the image display system.

In the above-mentioned aspect, an event for changing the display section of the image may be, for example, execution of an operation to command the image display system to change the display section.

In particular, it may be an operation to command reproducing in a display section independent of the marker. In this case, the invention according to the above-mentioned aspect may be modified as described in the following second aspect.

In the second aspect of the present invention, after reproducing of the content by the content-reproduction unit starts, the event-detection unit detects an event that an area-command operation is executed to command the image display system that the content should be reproduced in the display section independent of the marker; and, if the area-command operation is detected by the event-detection unit, the area-change unit changes the display section for reproducing the content to the defined display section that is not based on the marker in the display unit.

In the present invention, the content can be reproduced in the display section independent of a marker after the area-command operation is detected. Thus, by giving the image display system the area-command operation, a user is allowed to view the content corresponding to the marker continuously without keep image-capturing an area including the marker.

In the above-mentioned aspect, a "display section independent of a marker" may be any display section that is not based on a previous marker; it is not particularly limited to a specific section. For example, the "display section independent of a marker" may be; a display section that is based on a given position in the display area of the display unit and is within a necessary range for reproducing the content; a display section displaced for given amounts to the left, right, up, and down from the display section where the content had been reproduced; and a display section that is centered in the display area of the display unit.

With respect to the marker specified as the object-to-be-detected, if the necessary range for reproducing the content corresponding to the marker has a shape similar to the shape of the entire display area of the display unit, the entire display area may be the "display section independent of a marker". In this case, the inventions according to the above-mentioned aspects may be modified as described in the following third aspect.

In the third aspect of the present invention, if the area-command operation is detected by the event-detection unit, the area-change unit changes the display section for reproducing the content to the entire display area of the display unit.

With this invention, the content can be reproduced in the entire display area of the display unit after the area-command operation is detected. Thus, by giving the image display system the area-command operation, a user is allowed to view the content corresponding to the marker continuously on the entire display.

In each of the above-mentioned aspects, a "display section that is not based on a marker" may be a display section that is based on a marker different from a previous marker. In this case, the inventions according to each of the above-mentioned aspects may be modified as described in the following fourth aspect.

In the fourth aspect of the present invention, after reproducing of the content by the content-reproduction unit starts, the event-detection unit detects an event that a marker-command operation is executed to command the image display system to change the marker that had been specified as the object-to-be-detected at that point (the moment when reproducing started) to a different marker; if the marker-command operation is detected by the event-detection unit, the area-change unit changes the display section where the content-for-reproduction has been reproduced to a display section defined based on the marker (the different marker) that is associated with the marker-command operation; after the display section is changed by the area-change unit that received the marker-command operation and in a state where the different marker is being detected by the marker-detection unit, the content-reproduction unit reproduces, in the display section defined based on the different marker in the display unit, the content that has been reproduced.

With this invention, after the marker-command operation is detected, the content can be reproduced in a display section that is based on a different marker that is associated with the operation. Thus, by giving the image display system the marker-command operation, a user is allowed to view the content corresponding to a previous marker on the display section that is based on the different marker.

The marker-command operation in this aspect may, for example, make a part or all of an image that had been obtained by the camera unit at that point (the moment when the marker-command operation is executed) designated as a "different marker" or make a particular image stored in the storage unit of the image display system or on the network designated as a "different marker".

While the image display system described above realizes a virtual reality by superimposing the content on the image captured by the camera unit, some effects that match operations of the image display system may be rendered to the content thus reproduced to further enhance the sense of virtual reality.

A specific example may be to modify the inventions according to each of the above-mentioned aspects as described in the following fifth aspect. In the fifth aspect of the present invention, a displacement-detection unit and a direction-identifying unit are further provided.

The displacement-detection unit detects that the image display system is displaced towards a specific direction with more than certain acceleration; based on a displacement direction detected by the displacement-detection unit and a direction of the display unit identified in relation to a displacement direction, which is possibly detected, the direction-identifying unit identifies, in the display area of the display unit, a direction that is opposite to the displacement direction detected by the displacement-detection unit; after reproducing of the content by the content-reproduction unit starts, the event-detection unit detects an event that displacement of the image display system by the displacement-detection unit has started; and when start of the displacement is detected by an area-change-event detection unit, the area-change unit displaces the display section where the content is being reproduced by a certain amount at a given speed towards the direction identified by the direction-identifying unit at that point (the moment when start of the displacement was detected), and then move the display section back to the previous position at a given speed.

With this invention, it is possible to render effects of making the content that is being reproduced in the display unit follow behind the displacement of the image display system per se, and thereby further enhance the sense of virtual reality.

A sixth aspect of the present invention is an electronic device that displays, on the display unit, an image captured by the camera unit. The device comprises a marker-detection unit, a content-reproduction unit, an event-detection unit, and an area-change unit, wherein after image-capturing by the camera unit starts or after displaying of a captured image in the display unit starts, the marker-detection unit detects that a marker specified in advance as an object-to-be-detected is present in the captured image; in a state where the marker is being detected by the marker-detection unit, the content-reproduction unit reproduces content corresponding to the marker in a display section defined based on the marker in the display unit; after reproducing of the content by the content-reproduction unit starts, the event-detection unit detects whether an event for changing a display-mode of the content has occurred to the electronic device; and, if the occurrence of the event is detected by the event-detection unit, the area-change unit changes at least the display section to reproduce the content to a display section that is in accordance with the detected event.

In addition, after the area-change unit changes the display section, the content-reproduction unit reproduces, in the changed display section, the content that has been reproduced.

With this electronic device, it is possible to configure a part of the image display system in each of the above-mentioned aspects. In this aspect, it may be configured to have any one or both of an external camera unit and a display unit wired or wirelessly connected via an interface and control operation thereof, or it may be configured to comprise any one or both of the camera unit and the display unit as elements.

A seventh aspect of the present invention is a program that causes a computer to function as all elements described in any one of the above-mentioned aspects. A computer system having this program implemented will provide actions and results similar to the invention of each of the above-mentioned aspect.

This program can be provided to an image processing system or to a user of the system in a form of being recorded in a recording medium that is readable by a computer, for example, an optical disk such as a CD-ROM or a DVD, a magnetic disk, and a semiconductor memory.

An eighth aspect of the present invention is an image display method to display a camera unit and an image captured by the camera unit on at least one computer; the method comprises a marker-detection step, a content-reproduction step, an event-detection step, and an area-change step.

Among these, the marker-detection step is a step in which, after capturing of the image by a camera step starts or after displaying of the captured image in the display step starts, it is detected that a marker specified in advance as an object-to-be-detected is present in the captured image; the content-reproduction step is a step in which, in a state where the marker is being detected in the marker-detection step, the content corresponding to the marker is reproduced in a display section defined based on the marker in the display step; the event-detection step is a step in which, after reproducing of the content in the content-reproduction step starts, it is detected whether an event for changing a display-mode of the content has occurred to the computer; and the area-change step is a step in which, if the occurrence of the event is detected by the event-detection step, at least a display section to reproduce the content is changed to a display section that is in accordance with the detected event.

Additionally in the content-reproduction step, after the display section is changed by the area-change step, the content that has been reproduced is reproduced in the changed display section.

The image display system that displays an image by means of the above described method will provide actions and results similar to the invention of each of the above-mentioned aspects.

### BRIEF DESCRIPTION OF THE DRAWINGS

FIG. 1 is a block diagram showing the entire configuration of an image display system.
FIG. 2 is a flow chart showing content-reproduction processing.
FIG. 3A is an illustration showing an example of a marker; FIG. 3B is an illustration showing the marker and a reproduction-display-section; and FIG. 3C is an illustration of the content being superimposed on the marker.
FIG. 4 is a flow chart showing event processing.
FIG. 5 is an illustration (1) showing operations when area-command operation is executed.
FIG. 6 is an illustration (2) showing operations when the area-command operation is executed.
FIG. 7 is an illustration showing operations when marker-command operation is executed.

### EXPLANATION OF REFERENCE NUMERALS

1...image display system, 11...control unit, 13...communication unit, 15...storage unit, 21...camera unit, 23...input unit, 25...display unit, 27...audio input-output unit, 31...GPS sensor, 33...acceleration sensor.

### MODE FOR CARRYING OUT THE INVENTION

Hereinafter, embodiments of the present invention are described with reference to the drawings.

### (1) Entire Configuration

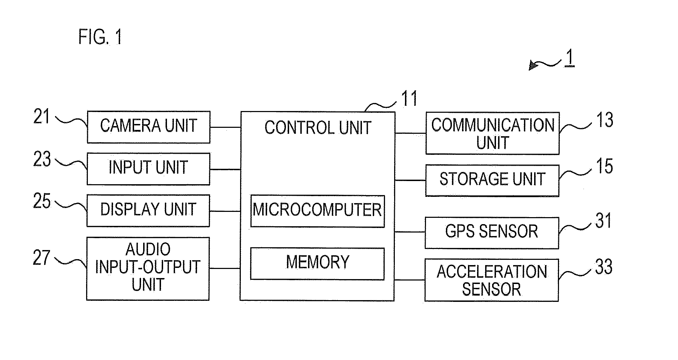

An image display system 1 comprises a control unit 11, a communication unit 13, a storage unit 15, a camera unit 21, an input unit 23, a display unit 25, an audio input-output unit 27, a GPS sensor 31, and an acceleration sensor 33 as shown in FIG. 1. Although the present embodiment illustrates a case where the image display system 1 is implemented in a mobile phone terminal, this image display system 1 may be configured by establishing a wired or wireless connection between an electronic device that does not comprise any one or more of the elements from a camera unit 21, touch panels of a display unit 25 and input unit 23, and these elements via an interface.

Among the above, the control unit 11 controls operations of the entire image display system 1 by an internal microcomputer and a memory. The communication unit 13 comprises communication modules, which respectively correspond to different communication standards (communication standards for mobile phones, Wireless-LAN standards, Near Field Communication standards), and controls wireless communication of the image display system 1.

The input unit 23 comprises a touch panel integrated with a display surface of the display unit 25 as well as key switches disposed in a main body of the image display system 1 and receives an input operation from a user therethrough.

The GPS sensor 31 is a sensor configured to identify the current position of the image display system 1 based on radio waves received from GPS (Global Positioning System) satellites.

The acceleration sensor 33 is a sensor configured to detect acceleration, applied to the image display system 1 and direction of the acceleration.

### (2) Content-Reproduction Processing

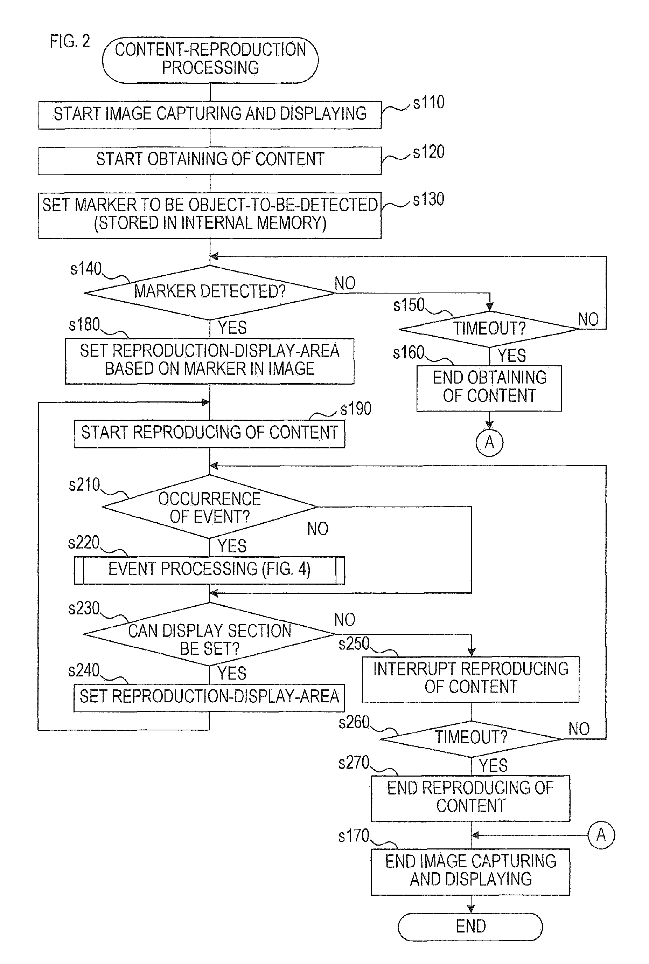

Processing procedures of content-reproduction processing executed by the control unit 11 in accordance with an application program stored in the storage unit 15 is explained herein with reference to FIG.2. This content-reproduction processing is executed when an operation to activate this processing is executed to the input unit 23.

When the content-reproduction processing is activated, capturing of an image by the camera unit 21 and displaying of the image thus captured (hereinafter referred to as "captured image") in the display unit 25 start (s110).

Next, accessing to the storage place determined in advance on the network via the communication unit 13 is executed, and obtaining (downloading) of specified content stored in this storage place starts (s120).

Although it is configured here to start obtaining of the content after displaying of the captured image by the above described s110 starts; it may be configured to start obtaining of the content when image-capturing by the camera unit 21 starts or when detecting of a marker, which will be mentioned later in a subsequent step (s140), takes place.

Next, a marker that is to be an object-to-be-detected in subsequent steps is set (s130). A specified elemental image that is determined as corresponding to the content, obtaining of which starts in the above described s120, is set (stored in an internal memory) here as the marker that is to be the object-to-be-detected in the subsequent steps.

Next, it is examined whether the marker set in the above described s130 is detected in the captured image (s140). It is determined here that the marker is detected if the captured image includes the elemental image to be the marker set in the above described s130.

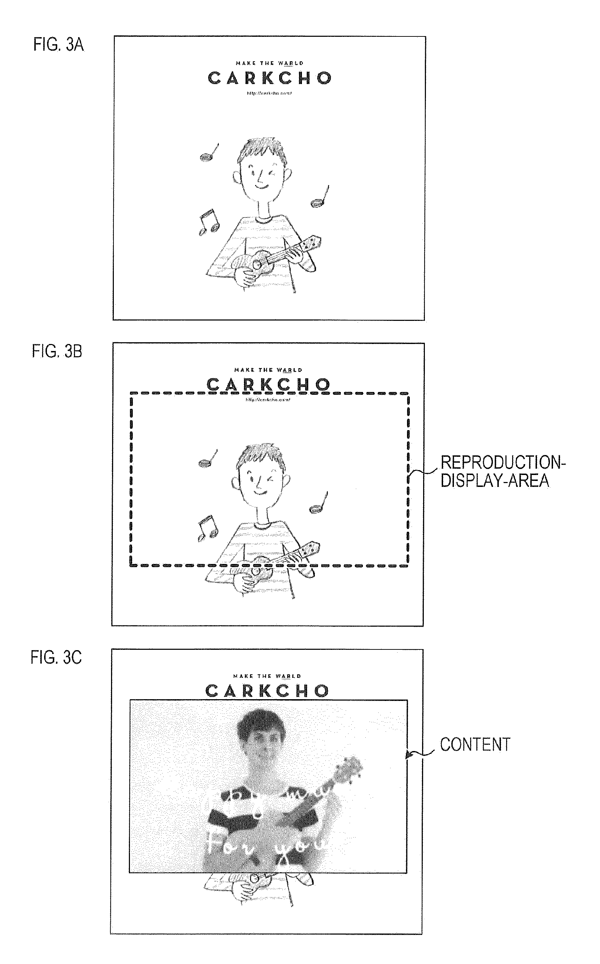

For example, in a case where an elemental image of an illustration comprising a rectangular area is specified as a marker (see FIG.3A), it is examined whether there is an image area in a captured image having the same features (such as, shapes and color distributions) as the marker of this illustration, and then, an image area having a matching degree in terms of features equal to or more than a specified threshold level is detected as a marker.

This examination in s140 is repeated (s150: NO→s140) until elapsed time after displaying of the image starts in the above described s110 reaches a stipulated time (timeout) (s150: YES).

If the timeout is reached in this repetition (s150: YES), obtaining of the content started in the above described s120 is ended (s160) and capturing and displaying of the image started in the above described s110 are ended (s170), and then, the content-reproduction processing is ended.

The content that had been obtained is discarded in the above described s160. Meanwhile, if a marker is detected in the examination in the above described s140 (s140: YES), a display section defined based on the marker in the captured image in the display unit 25 is set as a display section (reproduction-display-section) where the content, obtaining of which is started in the above s120, should be reproduced (s180).

Next, reproducing of the content, obtaining of which is started in the above described s120, starts in the reproduction-display-section that is set in the above described s180 in the display area of the display unit 25 (s190).

For example, in a case, similar to what is described above, where an illustration comprising a rectangular area is specified as a marker and content is a still image or a moving image that should be reproduced in a rectangular shape, a rectangular-shape area on the marker may be set as the reproduction-display-section in the above described s180 (see FIG.3B) and the content may be reproduced in this area in the above described s190 (see FIG.3C).

After reproducing of the content thus starts, it is examined whether an event has occurred in the image display system 1 (s210). In the present embodiment, an operation executed to the touch panel of the input unit 23 or detection of acceleration equal to or greater than a certain rate by the acceleration sensor 33 is determined as an occurrence of an event.

If it is determined that an event has occurred in this s210 (s210: YES), processing according to this event (event processing) is executed (s220), and then, the process continues to the next step (s230).

Processing executed in this event processing are such as; processing to change the set content display section to a display section independent of a marker in accordance with the occurred event; processing to change the set marker that is an object-to-be-detected to a different marker; and processing to add effects of AR to the display section of the content. The details of the processing will be mentioned later.

Meanwhile, if it is determined that no event has occurred in the above described s210 (s210: NO), the process continues to the next step (s230) without having the above mentioned event processing executed.

Next, it is examined at this point (the moment when the process continues to s230) whether it is in a state where it is possible to set the reproduction-display-section.

If the set reproduction-display-section has been changed to the display section independent of the marker in the above described event processing, it is thereby determined here that it is in the state where it is possible to set the reproduction-display-section. In addition, if the set reproduction-display-section has not been changed to the display section independent of the marker, or if the set marker that is the object-to-be-detected has been changed to the different marker in the above described event processing, it is determined that it is in the state where it is possible to set the reproduction-display-section by the fact that the marker is being detected as in the above described s140. Conversely, if a marker is not detected in this case, it is determined that it is not in the state where it is possible to set the reproduction-display-section.

If it is determined in this s230 that it is in the state where it is possible to set the reproduction-display-section (s230: YES), a display section at this point (the moment when it is determined that it is possible to set the reproduction-display-section) or a display section that is in accordance with the set state of the marker (the display section independent of the marker or the display section based on the marker) is set as the reproduction-display-section (s240), and then, the process goes back to s190.

In this case, if reproduction of the content is interrupted in a processing to be mentioned later (s250), the reproduction is resumed in s190 from the point where the reproduction is interrupted.

If the set reproduction-display-section is not changed to the display section independent of the marker, or if the set marker that is the object-to-be-detected is changed to a different marker in this s240, a display section defined based on the marker in the captured image at this point (the moment when s240 is executed, i.e. the moment when it is determined in s230 that it is possible to set the reproduction-display-section) in the display unit 25 is set as the reproduction-display-section in order to adjust the reproduction-display-section in accordance with the position of the marker in the captured image. If the set reproduction-display-section is changed to the display section independent of the marker, it is not necessary to adjust the reproduction-display-section in accordance with the position of the marker in the captured image; thus, no processing takes place in this s240.

If it is determined in the above s230 that it is not in the state where it is possible to set the reproduction-display-section (i.e. a marker is not detected from the captured image) (s230: NO), reproduction of the content started in the above described s190 is interrupted (s250). If reproducing of the content has already been interrupted, the reproducing remains interrupted in this s250.

These examinations performed by the above described s210 and s230 are repeated (s260: NO→s210) while reproducing of the content remains interrupted (s260: YES) until the time reaches a stipulated time (timeout).

If the timeout is reached in this repetition (s260: YES), reproducing of the content started in the above described s190 is ended (s270), the process continues to s170 and capturing and displaying of the image are ended (s170), and then, the content-reproduction processing is ended. The content that had been obtained is discarded in this s170.

In the above described s270, if obtaining of the content has not been ended at that point (the moment when the timeout is reached in s260 and the process is determined to take "YES"), obtaining of the content is also ended as in the above described s160.

### (2) Event Processing

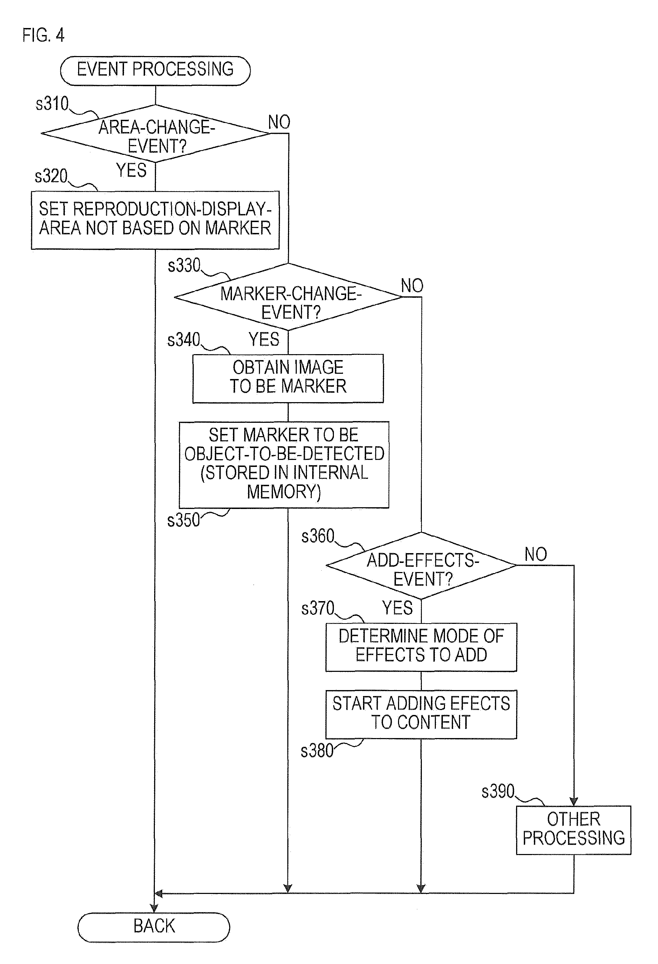

Next, processing procedure of event processing, which is s220 in the content-reproduction processing, is explained herein with reference to FIG.4.

In this event processing, it is examined whether the event that is determined to have occurred in the above described s210 is an area-change-event (s310). An execution of an area-command operation to the input unit 23 for commanding that the content should be reproduced in a display section independent of a marker (operation to touch anywhere on the touch panel once in the present embodiment) is determined here as the "area-change-event".

If it is determined as the area-change-event in this s310 (s310: YES), a display section that is not based on the marker in the captured image in the display unit 25 is set as the reproduction-display-section (s320).

For example, a display section within a necessary range for reproducing the content is set as the reproduction-display-section based on a given position in the display area of the display unit 25. In particular, a display section displaced for given amounts to the left, right, up, and down from the reproduction-display-section that has been used, or a display section by which the content is centered in the display area of the display unit 25.

If the necessary range for reproducing the content has a shape similar to the shape of the entire display area (entire area used for displaying an image) of the display unit 25, this entire display area may be set as the reproduction-display-section. In this case (having the similar shape), it may be configured to obtain the shape of the entire display area of the display unit 25 and the shape of the display section required for reproducing the content as information (e.g.: a longitudinal/lateral ratio for a quadrangle), and then to actively confirm whether these shapes are similar to each other by comparing matching degrees of these shapes.

After s320 is ended as described above, the process goes back to the content-reproduction processing and steps from the above described s230 are executed.

In addition, if the event that is determined to have occurred in the above described s210 is not an area-change-event (s310: NO), it is examined whether the event is a marker-change-event (s330).

An execution of a marker-command operation to the touch panels in the input unit 23 is determined here as the "marker-change-event", the marker-command operation is for commanding that the marker specified as the object-to-be-detected at that point (the moment when examination is about to take place in s330) should be changed to a different marker.

In the present embodiment, this "marker-command operation" is, for example: an operation to make a part or all of the image that is being captured at that point (the moment when the marker-command operation is executed) designated as a different marker, and to make a particular image that is stored in the storage unit 15 or on the network designated as a different marker.

If it is determined as a marker-change-event in this s330 (s330: YES), the "different marker" designated by the marker-command operation is obtained as an image data (s340).

In this s340, it may be determined whether the obtained image data can be appropriately used as a marker based on shapes and color distributions thereof, and only when the obtained image data can be used, the process may continues to the subsequent steps. If it is determined that the obtained image data cannot be used, the process goes back to the content-reproduction processing after displaying an error message for this determination on the display unit 25, and then steps from the above described s230 may be executed.

Next, a marker that is to be an object-to-be-detected in the subsequent steps is set (s350). Here, the image obtained in the above described s340 as the "different marker" is set as the marker that is to be the object-to-be-detected from the image in the subsequent steps, as in the above described s130.

After s350 is thus ended, the process goes back to the content-reproduction processing, and processing from the above described s230 is executed.

If the event that is determined to have occurred in the above described s210 is not a marker-change-event (s330: NO), it is examined whether the event is an add-effects-event (s360). Detection of more than certain acceleration using the acceleration sensor 33 is determined here as the "add-effects-event".

If it is determined as an add-effects-event in this s360 (s360: YES), a mode for effects that should be added to the display section of the content is determined (s370).

In the present embodiment, a direction to displace the reproduction-display-section is determined as a mode for effects to add effects where the reproduction-display-section is displaced to the opposite direction of the displacement of the image display system 1 per se and is back to the previous position. In particular, based on the direction of acceleration (displacement direction of the image display system 1) detected by the acceleration sensor 33 and the direction of the display unit 25 identified in relation to the displacement direction of the image display system 1, the opposite direction (opposite-displacement direction) of the displacement direction detected by the acceleration sensor 33 is identified in the display area of the display unit 25.

Along with the opposite-displacement direction, speed of displacement to this opposite-displacement direction may be determined based on the acceleration detected by the acceleration sensor 33.

Next (s380), effects are added to the content in the mode determined in the above described s370. Processing for adding the effects starts here; the processing includes displacing the reproduction-display-section for a certain amount at a specified speed towards the opposite-displacement direction determined in the above described s370, and then moving the reproduction-display-section back to the previous position.

If the speed of displacement to the displacement direction is determined in the above described s370, the reproduction-display-section may be displaced in accordance with this speed in s380.

After s380 is thus ended, the process goes back to the content-reproduction processing and steps from the above described s230 are executed.

If the event that is determined to have occurred in the above described s210 is none of the events mentioned above (s360: NO), the processing according to the event (other processing) is executed (s380), the process goes back to the content-reproduction processing, and steps from the above described s230 are executed.

### (4) Actions and Results

In the image display system 1 configured as described above, the reproduction-display-section for reproducing the content can be changed from a display section that is based on a marker in an image to a display section that is in accordance with an event occurred in the image display system 1 (s210∼s240).

By thus changing to the reproduction-display-section that is in accordance with the event, the content-for-reproduction corresponding to this marker can be reproduced independently of the display section where the marker that has been used is positioned. Thereby, the content can be reproduced continuously regardless of whether an area including the marker is captured by the camera unit 21; thus there is a high degree of freedom in reproducing and viewing the content.

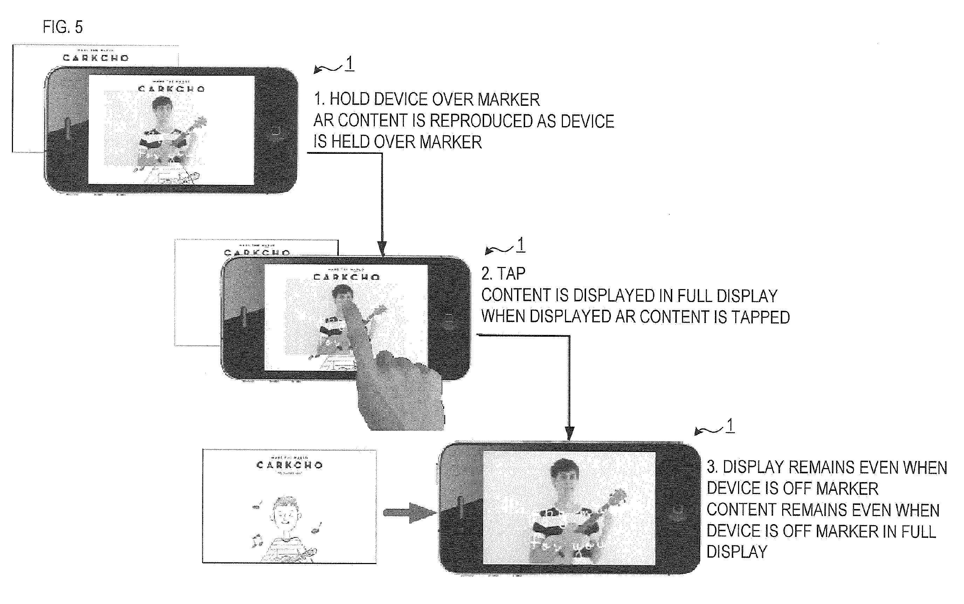

Additionally, after the area-command operation is detected (s310: "YES"), the content can be reproduced in the display section independent of the marker (s320) in the configuration described above. Thus, by executing the area-command operation (here, tapping the touch panel) to the image display system 1 as shown in FIG. 5, a user is allowed to view the content corresponding to the marker continuously without keep capturing the area including the marker.

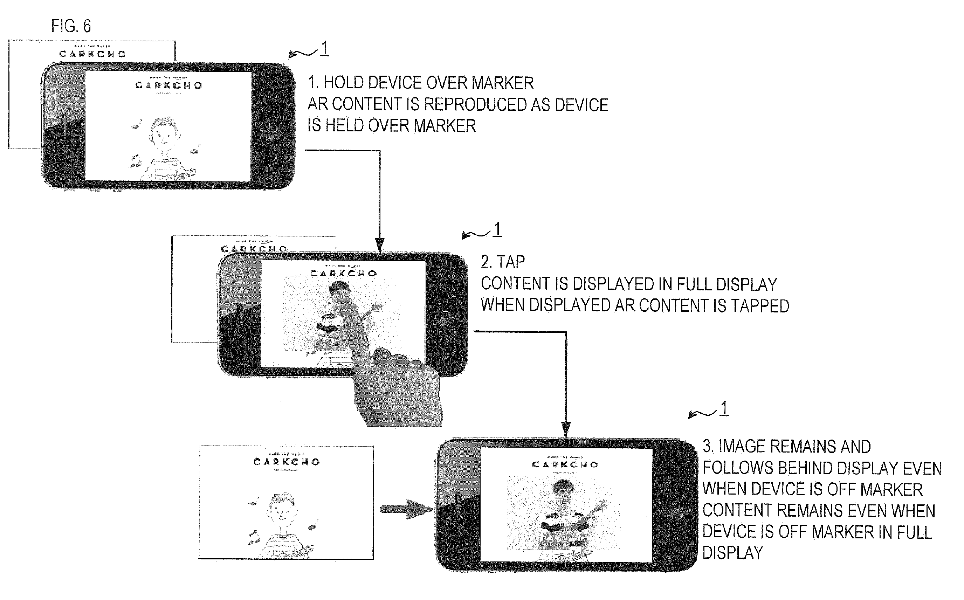

If a necessary range for reproducing the content has a shape similar to the shape of the entire display area of the display unit 25 in the configuration described above, the content can be reproduced in the entire display area of the display unit 25 (s320) after the area-command operation is detected (s310: "YES"). Thus, by executing the area-command operation (the same operation as above) to the image display system 1 as shown in FIG. 6, a user is allowed to view the content corresponding to the marker continuously in full display.

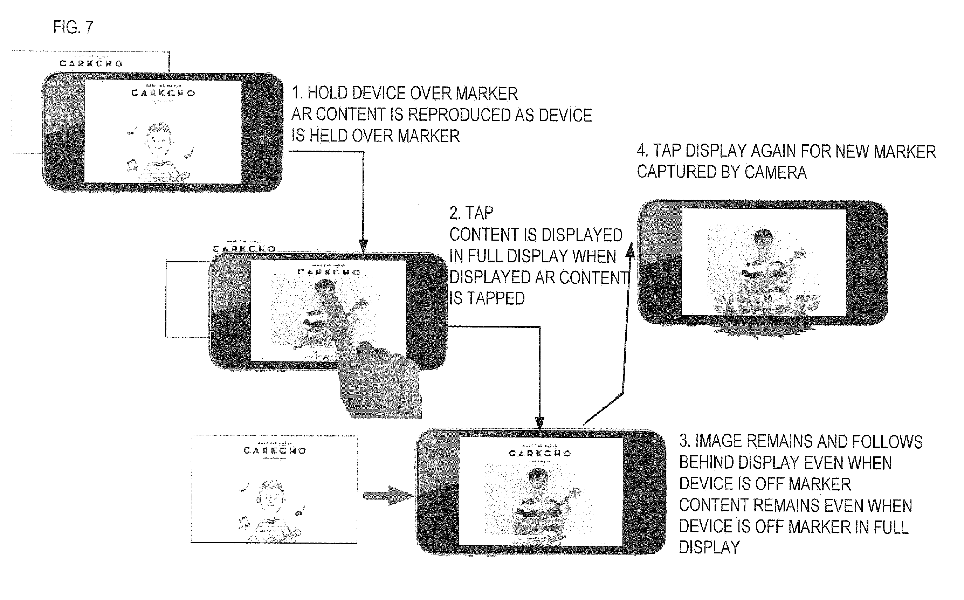

In the above-described configuration, after the marker-command operation is detected (s330: "YES"), the content can be reproduced in the display section that is based on the different marker that is associated with this operation (s340∼s350→s240). Thus, by executing the marker-command operation (here, capturing the "different marker") to the image display system 1 as in FIG. 7, a user is allowed to view the content corresponding to the previous marker in the display section that is based on the different marker.

In the above-described configuration, when the occurrence of the add-effects-event is detected (s360: "YES"), it is possible to render effects where the content reproduced in the display unit 25 follows behind the displacement of the image display system 1 per se, and thereby further enhance the sense of virtual reality.

### (5) Variations

Although the embodiments of the present invention are described above, the present invention is not limited to the above described embodiments and, needless to say, may take various modes to the extent of the technical scope of the present invention.

For example, in the above described embodiments, it is configured to specify the marker that is the object-to-be-detected as the image field comprising particular image features, and to discern the image field comprising this image features from the image captured by the camera unit 21, and to detect this image field as the marker.

Nevertheless, it may be configured to detect the marker that is the object-to-be-detected by identifying the actual position of an image field, which is comprised in the image captured by the camera unit 21, in the real-space based on information such as the position (identified by the GPS sensor 31) or the direction (identified by the acceleration sensor 33) of the image display system 1 (in particular, one or more pieces of information including "position" and "direction"), then discerning an image field comprising a particular location in the real-space (for example, a place or construction), and then detecting this image field as the marker. In this case, a corresponding location on a map and others or positional information and so forth may be specified as the "different marker" in the marker-command operation.

In the above described embodiments, it is configured to obtain the content via the network in every content-reproduction processing. Nevertheless, it may be configured to store the content in the storage unit 15 of the image display system 1 in advance, and obtain the content therefrom.

In the above described embodiment, it is configured that executing of an operation to the touch panel in the input unit 23 or detecting of more than certain acceleration by the acceleration sensor 33 is determined as an occurrence of an event. Nevertheless, it may be configured so that an operation other than those described above, or a change in the external environment determined from results detected by other sensors is determined as an occurrence of an event, and processing according to the event (s390) is executed.

In the above described embodiments, it is configured to add the effects in which the reproduction-display-section follows behind the displacement of the image display system 1 per se upon an occurrence of the add-effects-event. Nevertheless, effects to add to the content may be any effects for enhancing the sense of virtual reality; it may be configured to add effects other than those described above.

In the above described embodiments, when the marker-command operation is executed, it is configured to change only the set marker that is an object-to-be-searched to a "different marker" and not to change the content that should be reproduced. Nevertheless, it may be configured to change the content along with the marker upon execution of this marker-command operation. For this purpose, the above described s340 may be configured so that obtaining of the content corresponding to this marker starts along with obtaining of an image to be the marker and the content that had been obtained is discarded.

In the above described embodiments, it is configured in the event processing to examine details of an event in the order of: the area-change-event, the marker-change-event, and the add-effects-event; however, the order to examine details of an event is not limited thereto.

### (6) Corresponding Relation to Present Invention

In the above described embodiments, s140 and s230 in the content-reproduction processing are examples of the marker-detection unit in the present invention, s190 is an example of the content-reproduction unit in the present invention, s210 along with s310, s330, and s360 of the event processing are examples of the event-detection unit in the present invention, s130 and s240 of the content-reproduction processing along with s320 of the event processing are examples of the area-change unit in the present invention, and s370 of the event processing is an example of the direction-identifying unit in the present invention.

## Claims

1. An image display system comprising:
a camera unit; and
a display unit that displays an image captured by the camera unit, the system comprising:
a marker-detection unit;
a content-reproduction unit;
an event-detection unit; and
an area-change unit,
wherein,
after capturing of an image by the camera unit starts or after displaying of a captured image in the display unit starts, the marker-detection unit detects that a marker specified in advance as an object-to-be-detected is present in the captured image;
in a state where a marker is being detected by the marker-detection unit, the content-reproduction unit reproduces content corresponding to the marker in a display section defined based on the marker in the display unit;
after reproducing of content by the content-reproduction unit starts, the event-detection unit detects whether an event for changing a display-mode of the content has occurred in the image display system;
if an occurrence of an event is detected by the event-detection unit, the area-change unit changes at least a display section to reproduce the content to a display section that is in accordance with the detected event; and,
after the display section is changed by the area-change unit, the content-reproduction unit reproduces, in a changed display section, the content that has been reproduced.

2. The image display system according to claim 1, wherein,
after reproducing of content starts by the content-reproduction unit, the event-detection unit detects an event that an area-command operation has been executed to command the image display system that the content should be reproduced in a display section independent of the marker; and,
if the area-command operation is detected by the event-detection unit, the area-change unit changes a display section to reproduce the content to a specified display section that is not based on the marker in the display unit.

3. The image display system according to Claim 2, wherein, with respect to a marker specified as an object-to-be-detected and in a case where a necessary range for reproducing content corresponding to the marker has a shape similar to that of an entire display area of the display unit,
the area-change unit changes a display section to reproduce the content to the entire display area of the display unit if the area-command operation is detected by the event-detection unit.

4. The image display system according to any one of claims 1 to 3, wherein,
after a time when reproducing of content by the content-reproduction unit starts, the event-detection unit detects an event that a marker-command operation has been executed to command the image display system that a marker specified as an object-to-be-detected at the time should be changed to a different marker;
if the marker-command operation is detected by the event-detection unit, the area-change unit changes a display section where the content-for-reproduction had been reproduced to a display section defined based on a marker that is associated with the marker-command operation (the different marker); and,
after the display section is changed by the area-change unit that received the marker-command operation and in a state where the different marker is being detected by the marker-detection unit, the content-reproduction unit reproduces, in a display section defined based on the different marker in the display unit, the content that had been reproduced.

5. The image display system according to any one of claims 1 to 4, further comprising a displacement-detection unit and a direction-identifying unit, wherein,
the displacement-detection unit detects that the image display system is displaced towards a specific direction with more than certain acceleration; and,
based on a displacement direction detected by the displacement-detection unit and a direction of the display unit identified in relation to a displacement direction, which is possibly detected, the direction-identifying unit identifies, in a display area of the display unit, a direction that is opposite to the displacement direction detected by the displacement-detection unit;
after reproducing of content by the content-reproduction unit starts, the event-detection unit detects an event that displacement of the image display system by the displacement-detection unit has started and,
when start of displacement is detected by the area-change-event detection unit, the area-change unit displaces a display section where the content is being reproduced by a certain amount at a specified speed towards a direction identified by the direction-identifying unit when the start of displacement is detected, and moves the display section back to a previous position at a specified speed.

6. An electronic device that displays, in a display unit, an image captured by a camera unit, the device comprising:
a marker-detection unit;
a content-reproduction unit;
an event-detection unit; and,
an area-change unit,
wherein,
after capturing of an image by the camera unit starts or after displaying of a captured image in the display unit starts, the marker-detection unit detects that a marker specified in advance as an object-to-be-detected is present in the captured image;
in a state where a marker is being detected by the marker-detection unit, the content-reproduction unit reproduces content corresponding to the marker in a display section defined based on the marker in the display unit;
after reproducing of content by the content-reproduction unit starts, the event-detection unit detects whether an event for changing a display-mode of the content has occurred to the electronic device;
if an occurrence of an event is detected by the event-detection unit, the area-change unit changes at least a display section to reproduce the content to a display section that is in accordance with a detected event; and,
after the display section is changed by the area-change unit, the content-reproduction unit reproduces, in the changed display section, the content that had been reproduced.

7. A program that causes a computer to function as all elements described in any one of claims 1 to 6.

8. An image display method for displaying a camera unit and an image captured by the camera unit in at least one computer, the method comprising:
a marker-detection step;
a content-reproduction step;
an event-detection step; and,
an area-change step,
wherein,
the marker-detection step is a step in which, after capturing of an image by the camera step starts or after displaying of a captured image in a display step starts, it is detected that a marker specified in advance as an object-to-be-detected is present in the captured image;
the content-reproduction step is a step in which, in a state where a marker is being detected by the marker-detection step, content corresponding to the marker is reproduced in a display section defined based on the marker in the display step;
the event-detection step is a step in which, after reproducing of content by the content-reproduction step starts, it is detected whether an event for changing a display-mode of the content has occurred to the computer;
the area-change step is a step in which, if an occurrence of an event is detected by the event-detection step, at least a display section to reproduce the content is changed to a display section that is in accordance with a detected event; and,
further in the content-reproduction step, after the display section is changed by the area-change step, the content that had been reproduced is reproduced in a changed display section.
